# EUROPEAN PATENT APPLICATION

(11) **EP 4 502 008 A1**
(43) Date of publication of application: **05.02.2025**
(21) Application number: 23780422.4
(22) Date of filing: 27.03.2023
(51) Int. Cl.: C08G 69/48, B32B 27/00, B32B 27/36, C08G 63/91, C09J 7/30, C09J 151/08

(54) **MODIFIED POLYESTER-BASED RESIN, ADHESIVE RESIN COMPOSITION, AND LAMINATE**

(30) Priority: 28.03.2022 JP 2022051564
(71) Applicant: Mitsubishi Chemical Corporation, Tokyo 100-8251 (JP)
(72) Inventor: KIKUCHI Kohei, Tokyo 100-8251 (JP); TANIGUCHI Masahiko, Tokyo 100-8251 (JP)
(74) Representative: Vossius & Partner Patentanwälte Rechtsanwälte mbB
(86) International application number: PCT/JP2023/012344
(87) International publication number: WO 2023/190413

(57) **Abstract**

The present invention provides an adhesive resin composition having a high biodegradation rate and excellent adhesiveness, and a laminate using the same. The adhesive resin composition according to the present invention is a copolymer in which an aliphatic-aromatic polyester-based resin is graft-modified with at least one selected from the group consisting of an α,β-unsaturatedcarboxylic acid and an anhydride thereof, and contains succinic acid as an aliphatic dicarboxylic acid unit constituting the aliphatic-aromatic polyester-based resin.

## Description

### TECHNICAL FIELD

The present invention relates to a modified polyester-based resin, an adhesive resin composition, and a laminate.

### BACKGROUND ART

In recent years, there has been active development of biodegradable plastics as a solution to the problem of plastic waste which has been causing a heavy burden on the global environment, such as an impact on ecosystems, generation of harmful gases during combustion, and global warming due to a large amount of heat generated by combustion.

Among them, carbon dioxide emitted when a plant-derived biodegradable plastic is combusted is originally in the air, so that the amount of carbon dioxide in the atmosphere does not increase. This is called carbon neutrality, and is considered important under the Kyoto Protocol, which imposes carbon dioxide reduction targets, and there is a desire for the active use of a plant-derived biodegradable plastic.

Some plant-derived biodegradable plastics have been commercialized as biodegradable packaging materials and biodegradable agricultural materials. Representative examples of the biodegradable plastics include aliphatic polyester-based resins such as a polylactic acid (hereinafter may be abbreviated as "PLA"), polybutylene succinate (hereinafter may be abbreviated as "PBS"), and polybutylene succinate adipate (hereinafter may be abbreviated as "PBSA"), and aliphatic-aromatic polyester resins such as polybutylene adipate terephthalate (hereinafter may be abbreviated as "PBAT"), polybutylene succinate terephthalate (hereinafter may be abbreviated as "PB ST"), polybutylene sebacate terephthalate (hereinafter may be abbreviated as "PBSeT"), polybutylene succinate furanoate (hereinafter may be abbreviated as "PBSF"), and polybutylene azelate terephthalate (hereinafter may be abbreviated as "PBAzT").

Patent Literature 1 discloses, as a laminate having heat resistance and being biodegradable after use, a biodegradable laminate containing a modified polyester-based resin in which polybutylene succinate (PBS) or polybutylene adipate terephthalate (PBAT) are graft-modified with maleic anhydride using as an adhesive layer between an aliphatic polyester-based resin layer made of a polylactic acid and a polyvinyl alcohol-based resin layer.

Patent Literature 2 discloses a laminated sheet in which a polylactic acid resin layer and a barrier layer made of an ethylene-vinyl alcohol copolymer are bonded together using a modified polyolefin-based resin.

### CITATION LIST

### PATENT LITERATURE

Patent Literature 1: WO 2013/069726
Patent Literature 2: WO 2017/069127

### SUMMARY OF INVENTION

### TECHNICAL PROBLEM

In recent years, due to the social trend toward stronger protection of the natural environment, there is a demand for a biodegradable resin that is not only partially biodegradable as in the past, but also has higher biodegradability and furthermore, excellent adhesiveness.

The above Patent Literatures 1 and 2 cite examples of using a biodegradable resin, but the adhesiveness of these resins did not satisfy recent demands.

The present invention has been made in view of such a background, and an object thereof is to provide a polyester-based resin which has a high biodegradation rate, excellent adhesiveness and from which a laminate having a good appearance can be obtained, and an adhesive resin composition and a laminate.

### SOLUTION TO PROBLEM

As a result of intensive research to solve the above problems, the inventors of the present invention have found that a modified polyester-based resin, which is obtained by graft-modifying an aliphatic-aromatic polyester-based resin with an α,β-unsaturated carboxylic acid and/or an anhydride thereof, and which contains succinic acid as an aliphatic dicarboxylic acid unit constituting the aliphatic-aromatic polyester-based resin, has biodegradability and can also exhibit adhesiveness, and is suitable as a resin for an adhesive layer for use in a biodegradable laminate.

The present invention is summarized as follows.
(1) A modified polyester-based resin, which is a copolymer in which an aliphatic-aromatic polyester-based resin is graft-modified with at least one selected from the group consisting of an α,β-unsaturated carboxylic acid and an anhydride thereof,
   the modified polyester-based resin containing succinic acid as an aliphatic dicarboxylic acid unit constituting the aliphatic-aromatic polyester-based resin.
(2) The modified polyester-based resin according to the above (1), comprising:
   terephthalic acid as an aromatic dicarboxylic acid unit constituting the aliphatic-aromatic polyester-based resin.
(3) The modified polyester-based resin according to the above (1), in which an amount of the succinic acid unit is 10 % by mole or more with respect to a total amount of the dicarboxylic acid unit.
(4) An adhesive resin composition comprising:
   the modified polyester-based resin according to any one of the above (1) to (3).
(5) A laminate comprising:
   at least one layer containing the adhesive resin composition according to the above (4).
(6) A laminate comprising:
   a polyvinyl alcohol-based resin (B) layer; a biodegradable resin (C) layer; and an adhesive layer between the above two layers, wherein
   the adhesive layer contains the adhesive resin composition according to the above (4).

### ADVANTAGEOUS EFFECTS OF INVENTION

According to the present invention, it is possible to provide a modified polyester-based resin and an adhesive resin composition having excellent biodegradability and excellent adhesiveness. The adhesive resin composition according to the present invention has both biodegradability and adhesiveness, thus can be used as an adhesive resin for a laminate, and is expected to be suitably used for containers for food applications, such as a coffee packaging material and a coffee capsule.

### DESCRIPTION OF EMBODIMENTS

Hereinafter, embodiments of the present invention will be described in detail, whereas the present invention is not limited to the following description, and can be optionally modified and implemented without departing from the gist of the present invention.

In the present description, when the expression "to" is used with numerical values or physical property values before and after the expression, the values before and after it are included.

In addition, in the present description, "mass" is synonymous with "weight".

### [Adhesive Resin Composition (A) Containing Modified Polyester-based Resin]

An adhesive resin composition (A) according to the present invention contains a modified polyester-based resin obtained by graft-modifying a polyester-based resin mainly containing an aliphatic-aromatic polyester-based resin to be described later (hereinafter, may be simply referred to as a "polyester-based resin") with at least one selected from the group consisting of an α,β-unsaturated carboxylic acid and an anhydride thereof.

The polyester-based resin is not particularly limited as long as it mainly contains an aliphatic-aromatic polyester-based resin. The expression "mainly contained" in the polyester-based resin generally refers to a component which is contained in the polyester-based resin in an amount of 80 mass% or more. Note that, as long as the polyester-based resin mainly contains an aliphatic-aromatic polyester-based resin, it may contain other resins within a range that does not impair the effects of the present invention. Examples of the other resins that may be contained in the polyester-based resin include synthetic resins such as a polyhydroxyalkanoate, an aromatic polyester-based resin, a polycarbonate, a polyamide, a polystyrene, a polyolefin, an acrylic resin, an amorphous polyolefin, ABS (acrylonitrile butadiene styrene), AS (acrylonitrile styrene), a polycaprolactone, a polyvinyl alcohol, and a cellulose ester, and a polylactic acid.

From the viewpoint of processing moldability and adhesiveness when used as an adhesive layer in a biodegradable laminate, the polyester-based resin is preferably composed only of an aliphatic-aromatic polyester-based resin.

As the aliphatic-aromatic polyester-based resin contained in the polyester-based resin, a polyester-based resin containing, as main structural units, an aliphatic diol unit, an aliphatic dicarboxylic acid unit, and an aromatic dicarboxylic acid unit is preferably exemplified.

In the present invention, the aliphatic diol refers to one in which two hydroxy groups are bonded to an aliphatic hydrocarbon group. The aliphatic hydrocarbon group is generally a linear aliphatic hydrocarbon group, and may have a branched structure or a cyclic structure, or may have a plurality of these.

The aliphatic dicarboxylic acid refers to one in which two carboxy groups are bonded to an aliphatic hydrocarbon group. The aliphatic hydrocarbon group is generally a linear aliphatic hydrocarbon group, and may have a branched structure or a cyclic structure, or may have a plurality of these.

The aliphatic-aromatic polyester-based resin contained in the polyester-based resin according to the present invention is a polymer having a repeating unit, and each repeating unit is also called a compound unit corresponding to a compound from which the repeating unit is derived. For example, a repeating unit derived from an aliphatic diol is also called an "aliphatic diol unit", a repeating unit derived from an aliphatic dicarboxylic acid is also called an "aliphatic dicarboxylic acid unit", and a repeating unit derived from an aromatic dicarboxylic acid is also called an "aromatic dicarboxylic acid unit".

In the polyester-based resin, a proportion of a succinic acid unit in a total amount of the dicarboxylic acid unit is preferably 10 % by mole or more. The polyester-based resin may be a mixture containing aliphatic polyester-based resins having different amounts of succinic acid units. For example, it is also possible to blend an aliphatic polyester-based resin that does not contain an aliphatic dicarboxylic acid unit other than succinic acid (contains only a succinic acid unit as the aliphatic dicarboxylic acid unit) with an aliphatic polyester-based resin that contains an aliphatic dicarboxylic acid unit other than succinic acid, and adjust the amount of the succinic acid unit in the polyester-based resin to fall within the above preferred range for use.

Specifically, the polyester-based resin is a polyester-based resin containing an aliphatic diol unit represented by the following formula (1) and at least one of an aliphatic dicarboxylic acid unit and an aromatic dicarboxylic acid unit represented by the following formula (2).

-O-R^{a}-O- (1)

-OC-R^{b}-CO- (2)

In the formula (1), R^{a} represents an aliphatic hydrocarbon group. In the formula (2), R^{b} represents a single bond, an aliphatic hydrocarbon group, or an aromatic hydrocarbon group. The polyester-based resin may contain either the aliphatic dicarboxylic acid unit represented by the formula (2) or the aromatic dicarboxylic acid unit represented by the formula (2), or both the aliphatic dicarboxylic acid unit represented by the formula (2) and the aromatic dicarboxylic acid unit represented by the formula (2).

The aliphatic diol unit, the aliphatic dicarboxylic acid unit, and the aromatic dicarboxylic acid unit represented by the formulae (1) and (2) may be derived from compounds derived from petroleum or from compounds derived from plant raw materials, and are desirably derived from compounds derived from plant raw materials.

When the polyester-based resin is a copolymer, the polyester-based resin may contain two or more kinds of aliphatic diol units represented by the formula (1), or the polyester-based resin may contain two or more kinds of aliphatic dicarboxylic acid units or aromatic dicarboxylic acid units represented by the formula (2).

An aliphatic diol represented by the formula (1) that provides the diol unit is not particularly limited, and is preferably an aliphatic diol having 2 to 10 carbon atoms, and particularly preferably an aliphatic diol having 4 to 6 carbon atoms, from the viewpoint of moldability and mechanical strength. Examples of the aliphatic diol include ethylene glycol, 1,3-propanediol, 1,4-butanediol, and 1,4-cyclohexanedimethanol, and among them, 1,4-butanediol is particularly preferred. Two or more kinds of the above aliphatic diols can be used.

The aliphatic dicarboxylic acid unit represented by the formula (2) preferably contains the succinic acid unit in an amount of 10 % by mole or more with respect to a total amount of the dicarboxylic acid unit. When the amount of the succinic acid structural unit in the polyester-based resin is 10 % by mole or more, it is possible to obtain a biodegradable laminate having excellent decomposability and moldability. For similar reasons, the amount of the succinic acid structural unit in the polyester-based resin is more preferably 20 % by mole or more, still more preferably 30 % by mole or more, and particularly preferably 40 % by mole or more, with respect to a total amount of the dicarboxylic acid unit. The larger the amount of the succinic acid structural unit is, the more preferable it is, and is most preferably 100 % by mole.

The aliphatic dicarboxylic acid unit represented by the formula (2) may contain one or more kinds of aliphatic dicarboxylic acid units other than succinic acid in an amount of 5 % by mole to 50 % by mole with respect to a total amount of the dicarboxylic acid unit. When the aliphatic dicarboxylic acid unit other than succinic acid is copolymerized within the above determined range, a degree of crystallinity of the polyester-based resin can be reduced, and the biodegradation rate can be increased.

An aliphatic dicarboxylic acid component that provides the aliphatic dicarboxylic acid unit represented by the formula (2) is not particularly limited, and is preferably an aliphatic dicarboxylic acid having 2 to 40 carbon atoms or a derivative thereof such as an alkyl ester, more preferably an aliphatic dicarboxylic acid having 4 to 10 carbon atoms or a derivative thereof such as an alkyl ester, and particularly preferably succinic acid. Examples of the aliphatic dicarboxylic acid having 4 to 10 carbon atoms or a derivative thereof such as an alkyl ester other than succinic acid include adipic acid, suberic acid, sebacic acid, dodecanedioic acid, a dimer acid, or a derivative thereof such as an alkyl ester. Among them, adipic acid, sebacic acid, and azelaic acid are preferred, and adipic acid is particularly preferred. Two or more kinds of the above aliphatic dicarboxylic acid components can be used. In this case, a combination of succinic acid and adipic acid is preferred.

Examples of the aromatic dicarboxylic acid unit represented by the formula (2) include an aromatic dicarboxylic acid unit having an aromatic hydrocarbon group which may have a substituent, and an aromatic oxycarboxylic acid unit having an aromatic hydrocarbon group which may have a substituent. The aromatic hydrocarbon group may be a monocyclic ring, or may be one in which a plurality of rings are bonded to or condensed with each other. Specific examples of the aromatic hydrocarbon group include a 1,2-phenylene group, a 1,3-phenylene group, a 1,4-phenylene group, a dinaphthylene group, and a diphenylene group.

Specific examples of the aromatic dicarboxylic acid component that provides the aromatic dicarboxylic acid unit represented by the formula (2) include terephthalic acid, isophthalic acid, naphthalenedicarboxylic acid, and diphenyldicarboxylic acid. Among them, terephthalic acid is preferred.

The aromatic dicarboxylic acid component may be a derivative of an aromatic dicarboxylic acid compound. For example, derivatives of the aromatic dicarboxylic acid components exemplified above are preferred. Among them, examples include a lower alkyl ester having 1 to 4 carbon atoms and an acid anhydride. Specific examples of the derivative of the aromatic dicarboxylic acid compound include: lower alkyl esters such as a methyl ester, an ethyl ester, a propyl ester, and a butyl ester of the aromatic dicarboxylic acid components exemplified above; and cyclic acid anhydrides of the aromatic dicarboxylic acid components exemplified above, such as succinic anhydride. Among them, dimethyl terephthalate is preferred.

When an aromatic compound component that provides these aromatic compound units has optical isomers, any of a D-form, an L-form, and a racemate may be used. In addition, the aromatic compound component is not limited to the above examples, so long as it can provide an aromatic compound unit. Further, the aromatic compound component may be used alone or in any combination of two or more kinds thereof in any ratio.

In the aliphatic-aromatic polyester-based resin, an aromatic dicarboxylic acid component is preferably used as a component that provides the aromatic compound unit. In this case, a content of the aromatic dicarboxylic acid unit is preferably 10 % by mole to 80 % by mole, based on a total amount (100 % by mole) of the aliphatic dicarboxylic acid unit and the aromatic dicarboxylic acid unit. When the amount of structural units of the aromatic dicarboxylic acid component in the polyester-based resin is 10 % by mole or more, the moldability and the heat resistance are excellent. For similar reasons, the amount of the aromatic dicarboxylic acid unit in the polyester-based resin is more preferably 20 % by mole or more, still more preferably 30 % by mole or more, with respect to a total amount of the dicarboxylic acid unit. In addition, it is preferable to use terephthalic acid as the aromatic dicarboxylic acid component, and it is preferable to use a polybutylene terephthalate succinate-based resin as the aliphatic-aromatic polyester-based resin.

The aliphatic-aromatic polyester-based resin can be produced in the same manner as the aliphatic polyester-based resin by using at least an aromatic compound component as a raw material.

The polyester-based resin may have a repeating unit derived from an aliphatic oxycarboxylic acid (aliphatic oxycarboxylic acid unit). Specific examples of an aliphatic oxycarboxylic acid component that provides the aliphatic oxycarboxylic acid unit include lactic acid, glycolic acid, 2-hydroxy-n-butyric acid, 2-hydroxycaproic acid, 6-hydroxycaproic acid, 2-hydroxy-3,3-dimethylbutyric acid, 2-hydroxy-3-methylbutyric acid, and 2-hydroxyisocaproic acid, or a derivative thereof such as a lower alkyl ester or an intramolecular ester. When these compounds have optical isomers, any of a D-form, an L-form, or a racemate may be used. The form may be a solid, a liquid, or an aqueous solution. Among them, particularly preferred is lactic acid or glycolic acid or a derivative thereof. These aliphatic oxycarboxylic acids can be used alone or as a mixture of two or more kinds thereof.

The polyester-based resin may have a repeating unit derived from an aromatic oxycarboxylic acid (aromatic oxycarboxylic acid unit). Specific examples of an aromatic oxycarboxylic acid component that provides the aromatic oxycarboxylic acid unit include p-hydroxybenzoic acid and p-β-hydroxyethoxybenzoic acid. The aromatic oxycarboxylic acid component may be a derivative of an aromatic oxycarboxylic acid compound. In addition, the polyester-based resin may be a compound (oligomer) having a structure in which a plurality of aliphatic oxycarboxylic acid compounds and/or aromatic oxycarboxylic acid compounds are mutually dehydrated and condensed. That is, an oligomer may also be used as a raw material.

When the polyester-based resin contains these aliphatic oxycarboxylic acid units or aromatic oxycarboxylic acid units, the content thereof is preferably 20 % by mole or less, more preferably 10 % by mole or less, still more preferably 5 % by mole or less, and most preferably 0 % by mole (not included), with respect to the amount of all structural units constituting the polyester-based resin (100 % by mole), from the viewpoint of moldability.

The polyester-based resin may be one in which the melt viscosity may be increased by copolymerizing of an aliphatic polyhydric alcohol with trifunctionality or higher functionality, an aliphatic polycarboxylic acid with trifunctionality or higher functionality or an acid anhydride thereof, or an aliphatic polyoxycarboxylic acid component with trifunctionality or higher functionality.

Specific examples of the trifunctional aliphatic polyhydric alcohol include trimethylolpropane and glycerin. Specific examples of the tetrafunctional aliphatic polyhydric alcohol pentaerythritol. These may be used alone or in combination of two or more kinds thereof.

Specific examples of the trifunctional aliphatic polycarboxylic acid or an acid anhydride thereof include propanetricarboxylic acid or an acid anhydride thereof. Specific examples of the tetrafunctional polycarboxylic acid or an acid anhydride thereof include cyclopentanetetracarboxylic acid or an acid anhydride thereof. These may be used alone or in combination of two or more kinds thereof.

The trifunctional aliphatic oxycarboxylic acid is classified into (i) a type having two carboxy groups and one hydroxy group in the same molecule, and (ii) a type having one carboxy group and two hydroxy groups in the same molecule. Any type can be used, but from the viewpoint of the moldability, the mechanical strength, and the appearance of a molded product, (i) the type having two carboxy groups and one hydroxy group in the same molecule, such as malic acid, is preferred, and more specifically, malic acid is preferably used.

The tetrafunctional aliphatic oxycarboxylic acid component is classified into (i) a type having three carboxy groups and one hydroxy group in the same molecule, (ii) a type having two carboxy groups and two hydroxy groups in the same molecule, and (iii) a type having three hydroxy groups and one carboxy group in the same molecule. Any type can be used, but those having a plurality of carboxy groups are preferred, and more specific examples include citric acid and tartaric acid. These may be used alone or in combination of two or more kinds thereof.

When the polyester-based resin contains such a structural unit derived from a component with trifunctionality or higher functionality, the content thereof has a lower limit of generally 0 % by mole or more, preferably 0.01 % by mole or more, and an upper limit of generally 5 % by mole or less, preferably 2.5 % by mole or less, with respect to the amount of all structural units constituting the aliphatic polyester-based resin (100 % by mole).

As a method for producing the polyester-based resin, a common method for producing a polyester can be used. A polycondensation reaction in this case can be carried out under suitable conditions that have been used in the related art, and is not particularly limited. Generally, a method in which an esterification reaction has proceeded and then a polymerization degree is further increased by carrying out a pressure reduction operation is used.

During the production of the polyester-based resin, in the case of reacting a diol component forming a diol unit with a dicarboxylic acid component forming a dicarboxylic acid unit, amounts of the diol component and the dicarboxylic acid component to be used are set such that the aliphatic polyester-based resin to be produced has a desired composition. Generally, the diol component and the dicarboxylic acid component react in substantially equimolar amounts. However, since the diol component is distilled off during the esterification reaction, the diol component is generally used in an excess of from 1 % by mole to 20 % by mole with respective to the dicarboxylic acid component.

When the polyester-based resin contains components (optional components) such as an aliphatic oxycarboxylic acid unit and a polyfunctional component unit in addition to the essential components, the aliphatic oxycarboxylic acid unit and the polyfunctional component unit are each reacted with a corresponding compound (a monomer or an oligomer) to have an intended composition. At this time, there is no limit to the timing and method of introducing the above optional components into the reaction system, and any timing and method are acceptable as long as an aliphatic polyester-based resin which is suitable for the present invention can be produced.

For example, the timing and method of introducing the aliphatic oxycarboxylic acid into the reaction system are not particularly limited as long as it is performed before a polycondensation reaction of the diol component and the dicarboxylic acid component. Examples of the method include (1) a method of mixing a catalyst dissolved in an aliphatic oxycarboxylic acid solution in advance, and (2) a method of introducing a catalyst into the reaction system and mixing at the same time when raw materials are added.

The timing of introducing a compound that forms the polyfunctional component unit may be simultaneous with adding of other monomers or oligomers at the initial stage of polymerization, or may be before the start of pressure reduction after a transesterification reaction, and it is preferable to add the compound simultaneously with other monomers or oligomers in terms of simplifying the process.

The polyester-based resin is generally produced in the presence of a catalyst. As the catalyst, any catalyst that can be used in the production of common polyester-based resins can be selected as long as it does not greatly impair the effects of the present invention. Compounds of metals such as germanium, titanium, zirconium, hafnium, antimony, tin, magnesium, calcium, and zinc are suitable. Among them, a germanium compound and a titanium compound are suitable.

Examples of the germanium compound that can be used as a catalyst include organic germanium compounds such as a tetraalkoxygermanium, and inorganic germanium compounds such as germanium oxide and germanium chloride. Among them, from the viewpoints of cost and availability, germanium oxide, tetraethoxygermanium, and tetrabutoxygermanium are preferred, and germanium oxide is particularly suitable.

Examples of the titanium compound that can be used as a catalyst include organic titanium compounds such as tetraalkoxytitanium compounds, for example, tetrapropyl titanate, tetrabutyl titanate, and tetraphenyl titanate. Among them, from the viewpoints of cost and availability, tetrapropyl titanate, tetrabutyl titanate, and the like are preferred.

Other catalysts may be used in combination as long as the object of the present invention is not impaired.

The catalyst may be used alone or in any combination of two or more kinds thereof in any ratio.

The amount of the catalyst to be used is any amount as long as it does not greatly impair the effects of the present invention, and is preferably 0.0005 mass% or more, more preferably 0.001 mass% or more, and is preferably 3 mass% or less, more preferably 1.5 mass% or less, with respect to the amount of the monomer to be used. When the amount falls below the lower limit of this range, there is a risk that the catalyst effect may not be achieved. When the amount exceeds the upper limit of this range, there is a risk that the production cost may increase, the obtained polymer may be greatly discolored, or hydrolysis resistance may decrease.

The timing of introducing the catalyst is not particularly limited as long as it is before the polycondensation reaction, and the catalyst may be introduced when the raw materials are added, or may be introduced when pressure reduction begins. In the case of introducing an aliphatic oxycarboxylic acid unit into the aliphatic polyester-based resin, it is preferred that a method of introducing a catalyst simultaneously with monomers or oligomers that form the aliphatic oxycarboxylic acid unit, such as lactic acid and glycolic acid, during the addition of raw materials, or dissolving a catalyst in an aqueous solution of an aliphatic oxycarboxylic acid and introducing the aqueous solution, and particularly preferred that a method of dissolving a catalyst in an aqueous solution of an aliphatic oxycarboxylic acid and introducing the aqueous solution, from the viewpoint of increasing a polymerization rate.

Reaction conditions such as a temperature, a polymerization time, and a pressure in the production of the polyester-based resin may be freely selected as long as the effects of the present invention are not greatly impaired. In an esterification reaction and/or a transesterification reaction between the dicarboxylic acid component and the diol component, in terms of the lower limit, the reaction temperature is preferably 150°C or higher, more preferably 180°C or higher, and in terms of the upper limit, the reaction temperature is preferably 260°C or lower, more preferably 250°C or lower. The reaction atmosphere is generally an inert atmosphere such as nitrogen or argon. The reaction pressure is preferably a normal pressure to 10 kPa, and among them, a normal pressure is preferred. In terms of the lower limit, the reaction time is preferably 1 hour or longer, and in terms of the upper limit, the reaction time is preferably 10 hours or shorter, more preferably 6 hours or shorter, still more preferably 4 hours or shorter.

When the reaction temperature is too high, excessive unsaturated bonds are produced, which may cause gelation due to the unsaturated bonds, making it difficult to control the polymerization.

A polycondensation reaction after the esterification reaction and/or the transesterification reaction of the dicarboxylic acid component and the diol component is desirably carried out under a vacuum pressure having a pressure, as the lower limit, of preferably 0.01 × 10³ Pa or more, more preferably 0.03 × 10³ Pa or more, and having a pressure, as the upper limit, of preferably 1.4 × 10³ Pa or less, more preferably 0.4 × 10³ Pa or less. In terms of the lower limit, the reaction temperature at this time is preferably 150°C or higher, more preferably 180°C or higher, and in terms of the upper limit, the reaction temperature is preferably 260°C or lower, more preferably 250°C or lower. In terms of the lower limit, the reaction time is preferably 2 hours or longer, and in terms of the upper limit, the reaction time is preferably 15 hours or shorter, more preferably 10 hours or shorter.

When the reaction temperature is too high, excessive unsaturated bonds are produced, which may cause gelation due to the unsaturated bonds, making it difficult to control the polymerization.

During the production of the polyester-based resin, a chain extender such as a carbonate compound or a diisocyanate compound can also be used. In this case, the amount of the chain extender is preferably 10 % by mole or less, more preferably 5 % by mole or less, and still more preferably 3 % by mole or less, as a proportion of a carbonate bond or a urethane bond in the polyester-based resin when the amount of all structural units constituting the polyester-based resin is 100 % by mole. However, when the urethane bond or the carbonate bond is present in the polyester-based resin, the biodegradability may be inhibited. Therefore, in the present invention, with respect to the amount of all structural units constituting the polyester-based resin, the amount of the carbonate bond is preferably less than 1 % by mole, more preferably 0.5 % by mole or less, and still more preferably 0.1 % by mole or less, and the amount of the urethane bond is preferably 0.55 % by mole or less, more preferably 0.3 % by mole or less, still more preferably 0.12 % by mole or less, and particularly preferably 0.05 % by mole or less. This amount, calculated per 100 parts by mass of the polyester-based resin, is preferably 0.9 parts by mass or less, more preferably 0.5 parts by mass or less, still more preferably 0.2 parts by mass or less, and particularly preferably 0.1 parts by mass or less. Particularly, when the amount of the urethane bond is more than the above upper limit value, in a film forming step or the like, decomposition of the urethane bond may cause problems such as smoke and odor from a molten film exiting a die outlet, and making it difficult to mold stably due to film breakage caused by foaming in the molten film.

The amount of the carbonate bond or the amount of the urethane bond in the polyester-based resin can be calculated based on results of NMR measurement such as ¹H-NMR and ¹³C-NMR.

Specific examples of the carbonate compound as the chain extender include diphenyl carbonate, ditolyl carbonate, bis(chlorophenyl) carbonate, m-cresyl carbonate, dinaphthyl carbonate, dimethyl carbonate, diethyl carbonate, dibutyl carbonate, ethylene carbonate, diamyl carbonate, and dicyclohexyl carbonate. In addition, carbonate compounds made of same or different hydroxy compounds derived from hydroxy compounds such as phenols and alcohols can also be used.

Specific examples of the diisocyanate compound include common diisocyanates such as 2,4-tolylene diisocyanate, a mixture containing 2,4-tolylene diisocyanate and 2,6-tolylene diisocyanate, 1,5-naphthylene diisocyanate, xylylene diisocyanate, hydrogenated xylylene diisocyanate, hexamethylene diisocyanate, isophorone diisocyanate, 4,4'-dicyclohexylmethane diisocyanate, tetramethylxylylene diisocyanate, 2,4,6-triisopropylphenyl diisocyanate, 4,4'-diphenylmethane diisocyanate, and tolidine diisocyanate.

Other chain extenders such as dioxazoline and a silicate ester may also be used.

Specific examples of the silicate ester include tetramethoxysilane, dimethoxydiphenylsilane, dimethoxydimethylsilane, and diphenyldihydroxysilane.

It is possible to produce a high molecular weight polyester-based resin with these chain extenders (coupling agents) using conventional techniques. The chain extender is added to the reaction system in a homogeneous molten state without a solvent after the polycondensation is completed, and is reacted with a polyester obtained by the polycondensation.

More specifically, it is possible to obtain a polyester-based resin having a higher molecular weight by reacting the above chain extender with a polyester obtained by catalytically reacting a diol component with a dicarboxylic acid component, the terminal group of which substantially has a hydroxy group and has a weight average molecular weight (Mw) of 20,000 or more, and preferably 40,000 or more. A prepolymer having a weight average molecular weight of 20,000 or more can be used with a small amount of chain extender to produce a high molecular weight polyester-based resin without producing gels during the reaction, since it is not influenced by the residual catalyst even under harsh conditions such as a molten state. Here, the weight average molecular weight (Mw) of the polyester-based resin is determined by measuring the molecular weight by gel permeation chromatography (GPC) at a measurement temperature of 40°C using chloroform as a solvent, and converting the measured value into an equivalent value based on monodisperse polystyrene.

For example, when the molecular weight of the polyester-based resin is further increased using the above diisocyanate compound as the chain extender, it is preferable to use a prepolymer having a weight average molecular weight of 20,000 or more, and preferably 40,000 or more. When the weight average molecular weight of the prepolymer is less than 20,000, the amount of the diisocyanate compound used to increase the molecular weight may increase, resulting in a decrease in heat resistance. Using such a prepolymer, a polyester-based resin having a urethane bond having a linear structure linked via a urethane bond derived from a diisocyanate compound is produced.

The pressure during chain extension is preferably 0.01 MPa to 1 MPa, more preferably 0.05 MPa to 0.5 MPa, still more preferably 0.07 MPa to 0.3 MPa, and most preferably a normal pressure.

During chain extension, in terms of the lower limit, the reaction temperature is preferably 100°C or higher, more preferably 150°C or higher, still more preferably 190°C or higher, most preferably 200°C or higher, and in terms of the upper limit, the reaction temperature is preferably 250°C or lower, more preferably 240°C or lower, still more preferably 230°C or lower. When the reaction temperature is too low, the viscosity is increased, it is difficult to achieve a uniform reaction, and high stirring power tends to be required. When the reaction temperature is too high, gelation and decomposition of the polyester-based resin tend to occur simultaneously.

In terms of the lower limit, the time for chain extension is preferably 0.1 minutes or longer, preferably 1 minute or longer, still preferably 5 minutes or longer, and in terms of the upper limit, the time for chain extension is preferably 5 hours or shorter, preferably 1 hour or shorter, still preferably 30 minutes or shorter, most preferably 15 minutes or shorter. When the time for chain extension is too short, the effect of adding the chain extender tends not to be exhibited. When the time for chain extension is too long, gelation and decomposition of the polyester-based resin tend to occur simultaneously.

The aliphatic-aromatic polyester-based resin has a weight average molecular weight of preferably from 5,000 to 1,000,000, more preferably from 20,000 to 500,000, and particularly preferably from 50,000 to 400,000, as a value converted to polystyrene as measured by GPC. When the weight average molecular weight of the polyester-based resin is too large, the melt viscosity is increased and melt molding tends to be difficult, and conversely, when it is too small, the molded product tends to be brittle.

The aliphatic-aromatic polyester-based resin has a melt flow rate (MFR) of preferably 0.1 g/10 min to 100 g/10 min, in terms of a value measured at 190°C and a load of 2.16 kg based on JIS K7210 (2014), and is more preferably 40 g/10 min or less, still more preferably 20 g/10 min or less, and particularly preferably 10 g/10 min or less, from the viewpoint of moldability and mechanical strength. On the other hand, the melt flow rate (MFR) is preferably 1.0 g/10 min or more, and more preferably 2.0 g/10 min or more. The MFR of the aliphatic-aromatic polyester-based resin can be adjusted by the molecular weight.

The aliphatic-aromatic polyester-based resin has a melting point of preferably 60°C or higher, more preferably 70°C or higher, still more preferably 80°C or higher, and preferably 180°C or lower, more preferably 160°C or lower, and particularly preferably 140°C or lower. When there are a plurality of melting points, at least one of the melting points is preferably within the above range. When the melting point is outside the above range, the moldability tends to be poor.

The aliphatic-aromatic polyester-based resin according to the present invention has a glass transition temperature (Tg) of preferably -35°C or higher, more preferably -30°C or higher, still more preferably -25°C or higher, and preferably 5°C or lower, more preferably 0°C or lower. When the glass transition temperature is lower than -35°C, the crystallization rate decreases, which may lead to deterioration of the moldability. On the other hand, the higher glass transition temperature is, the more likely the impact strength is to decreases.

The method for adjusting the melting point, the elastic modulus, and the glass transition temperature of the aliphatic-aromatic polyester-based resin is not particularly limited. For example, it is possible to make adjustment by selecting the kind of a copolymerization component, such as an aliphatic dicarboxylic acid or an aromatic dicarboxylic acid, adjusting a copolymerization ratio, or adjusting both.

In the present invention, the aliphatic-aromatic polyester-based resin is not limited to one kind, and two or more kinds of aliphatic-aromatic polyester-based resins which are different in kind of structural unit, ratio of structural units, production methods, physical properties and the like may be blended and used.

Examples of a commercially available product of the polyester-based resin include "Ecoflex" manufactured by BASF, which contains a polycondensate of adipic acid/terephthalic acid and 1,4-butanediol as a main component, and "BioPBS" manufactured by PTTMCC Biochem CO., LTD., which contains a polycondensate of succinic acid/adipic acid/1,4-butanediol as a main component. In addition, the polyester-based resin may contain, as an optional component, a polyhydroxyalkanoate such as "Aonilex" manufactured by Kaneka Corporation.

The modified polyester-based resin according to the present invention is a copolymer in which the above aliphatic-aromatic polyester resin is graft-modified with at least one selected from the group consisting of an α,β-unsaturated carboxylic acid and an anhydride thereof, and contains succinic acid as an aliphatic dicarboxylic acid unit constituting the aliphatic-aromatic polyester-based resin.

The polyester-based resin is biodegradable because of containing an aliphatic-aromatic polyester-based resin. The modified polyester-based resin according to the present invention in which such a polyester-based resin is graft-modified with an α,β-unsaturated carboxylic acid and/or an anhydride thereof, and thus has an aliphatic-aromatic polyester as a basic skeleton which has been slightly modified, and is thus biodegradable.

Specific examples of the α,β-unsaturated carboxylic acid and/or an anhydride thereof for use in graft modification of the polyester-based resin include α,β-unsaturated monocarboxylic acids such as acrylic acid and methacrylic acid, and α,β-unsaturated dicarboxylic acids such as maleic acid, fumaric acid, itaconic acid, citrus acid, tetrahydrophthalic acid, crotonic acid, and isocrotonic acid, or a derivative and an anhydride thereof. Preferably, an anhydride of an α,β-unsaturated dicarboxylic acid is used.

The present invention is not limited to the case where one kind of α,β-unsaturated carboxylic acid and/or an anhydride thereof is used alone, and two or more kinds thereof may be used in combination.

The method for graft-modifying the polyester-based resin with the α,β-unsaturated carboxylic acid and/or an anhydride thereof is not particularly limited, and any common method can be used. The graft modification can be carried out only by a thermal reaction, however it is preferable to use a radical initiator in order to increase the reactivity. As a method for carrying out the reaction, a solution reaction, a reaction in a suspension, and a reaction in a molten state without using a solvent, and among them, the reaction is preferably carried out in a molten state.

As a melting method, a method in which the polyester-based resin, the α,β-unsaturated carboxylic acid and/or an anhydride thereof, and the radical initiator are mixed in advance, and then the resulting mixture is melt-kneaded in a kneader to carry out the reaction, a method in which the α,β-unsaturated carboxylic acid and/or an anhydride thereof and the radical initiator are blended in the polyester-based resin in a molten state in a kneader, and the like can be used.

As a mixer for use in mixing the raw materials in advance, a Henschel mixer and a ribbon blender, or the like can be used. As the kneader for use in melt-kneading, a single-screw or twin-screw extruder, a roll, a Banbury mixer, a kneader, and a Brabender mixer or the like can be used.

The temperature during the melt-kneading may be set appropriately to a temperature equal to or higher than the melting point of the polyester-based resin within a temperature range in which thermal degradation is not caused. The melt-mixing is performed at preferably 100°C to 270°C, and more preferably 130°C to 250°C.

The amount of the α,β-unsaturated carboxylic acid and/or an anhydride thereof to be used is preferably in a range of from 0.0001 to 5 parts by mass, particularly preferably from 0.001 to 4 parts by mass, and especially preferably from 0.02 to 3 parts by mass, with respect to 100 parts by mass of the polyester-based resin. When the amount of the α,β-unsaturated carboxylic acid and/or an anhydride thereof to be used is too small, a sufficient amount of polar groups is not introduced into the polyester-based resin, and therefore, interlayer adhesiveness, particularly an adhesion force to a PVA-based resin layer, tends to be insufficient. When the amount of the α,β-unsaturated carboxylic acid and/or an anhydride thereof to be used is too large, the α,β-unsaturated carboxylic acid and/or an anhydride thereof not graft-polymerized may remain in the resin, and therefore, a poor appearance and the like due to the remaining α,β-unsaturated carboxylic acids tends to occur.

The radical initiator is not particularly limited, and any common radical initiator can be used. Examples thereof include organic and inorganic peroxides such as t-butyl hydroperoxide, cumene hydroperoxide, 2,5-dimethylhexane-2,5-dihydroperoxide, 2,5-dimethyl-2,5-bis(t-butyloxy)hexane, 3,5,5-trimethylhexanoyl peroxide, t-butyl peroxybenzoate, benzoyl peroxide, m-toluoyl peroxide, dicumyl peroxide, 1,3-bis(t-butylperoxyisopropyl)benzene, dibutyl peroxide, methyl ethyl ketone peroxide, potassium peroxide, and hydrogen peroxide; azo compounds such as 2,2'-azobisisobutyronitrile, 2,2'-azobis(isobutylamide)dihalide, 2,2'-azobis[2-methyl-N-(2-hydroxyethyl)propionamide], and azodi-t-butane; and carbon radical generators such as dicumyl.

These may be used alone or in combination of two or more kinds thereof.

A blending amount of the radical initiator is preferably in a range of 0.00001 to 2.0 parts by mass, particularly preferably 0.0001 to 1.5 parts by mass, and especially preferably 0.001 to 1.0 part by mass, with respect to 100 parts by mass of the polyester-based resin. When the blending amount of the radical initiator is too small, the graft polymerization may not proceed sufficiently, and therefore, sufficient interlayer adhesiveness may not be obtained. When the blending amount of the radical initiator is too large, a crosslinking reaction of the polyester-based resin proceeds, causing the extrusion amount during hot melt molding to be unstable, and thus, the appearance of a multi-layer molded product tends to deteriorate.

Two or more kinds of polyester-based resins can be used. In this case, the polyester-based resins can be mixed in advance and then graft-modified with the α,β-unsaturated carboxylic acid and/or a derivative thereof to produce a modified polyester-based resin, or two or more kinds of modified polyester-based resins can be mixed together.

A content of the α,β-unsaturated carboxylic acid and/or an anhydride thereof in the modified polyester-based resin is not particularly limited, and is preferably 0.01 mass% or more, more preferably 0.02 mass% or more, still more preferably 0.03 mass% or more, and is preferably 5.0 mass% or less, more preferably 4.0 mass% or less, still more preferably 3.0 mass% or less.

When the content of the α,β-unsaturated carboxylic acid and/or an anhydride thereof in the modified polyester-based resin is too small, the interlayer adhesiveness, particularly the adhesion force to a PVA-based resin layer, tends to be insufficient. When the content of the α,β-unsaturated carboxylic acid and/or an anhydride thereof in the modified polyester-based resin is too large, the stability during hot melt molding tends to decrease.

The content of the α,β-unsaturated carboxylic acid and/or an anhydride thereof in the modified polyester-based resin can be determined based on a spectrum obtained by ¹H-NMR measurement.

The adhesive resin composition (A) according to the present invention contains the above modified polyester-based resin according to the present invention. The modified polyester-based resin may be used alone or in combination of two or more kinds thereof.

In addition, the adhesive resin composition (A) may contain a resin other than the modified polyester-based resin according to the present invention. Examples of the resin other than the modified polyester-based resin according to the present invention include an aliphatic polyester-based resin, a modified aliphatic polyester-based resin, an aliphatic-aromatic polyester-based resin, a modified aliphatic-aromatic polyester-based resin, a polyolefin-based resin, and a modified polyolefin-based resin, or the like. The resin may be used alone or in combination of two or more kinds thereof.

A content of the modified polyester-based resin according to the present invention in the adhesive resin composition (A) is preferably 25 mass% or more, more preferably 50 mass% or more, and still more preferably 75 mass% or more. The upper limit is 100 mass%.

The adhesive resin composition (A) may contain any additive within the range that does not impair the effects of the present invention. Examples of the additive include a heat stabilizer, an antioxidant, a UV absorber, a crystal nucleating agent, an antistatic agent, a flame retardant, a plasticizer, a lubricant, a filler lubricant, and a crystal nucleating agent, or the like.

The adhesive resin composition (A) can be obtained by kneading the modified polyester-based resin according to the present invention with any other resins and additives.

### [Polyvinyl Alcohol-based Resin (B)]

A polyvinyl alcohol (PVA)-based resin (B) is preferably used as a gas barrier layer of a laminate according to the present invention to be described later, and particularly preferably has the gas barrier property of the laminate according to the present invention.

A layer containing the PVA-based resin (B) (PVA-based resin (B) layer) is preferably laminated on at least one surface of a biodegradable resin (C) layer to be described later via a layer (adhesive layer) containing the adhesive resin composition (A) described above.

The PVA-based resin (B) layer for use in the present invention is a layer containing the PVA-based resin (B) as a main component, and generally contains the PVA-based resin (B) in an amount of 70 mass% or more, preferably 80 mass% or more, and more preferably 90 mass% or more. The upper limit is 100 mass%. When the content is too small, the gas barrier properties tend to be insufficient.

The PVA-based resin (B) for use in the present invention is a resin containing as a main structural unit, a vinyl alcohol structural unit, which is obtained by saponifying a polyvinyl ester-based resin obtained by polymerizing a vinyl ester-based monomer, and is composed a vinyl alcohol structural unit in an amount equivalent to a degree of saponification and a vinyl ester structural unit.

Examples of the vinyl ester-based monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, and vinyl versatate. Economically, vinyl acetate is preferably used.

The PVA-based resin (B) for use in the present invention has the average polymerization degree (measured in accordance with JIS K6726) of preferably from 200 to 1800, particularly preferably from 300 to 1500, and especially preferably from 300 to 1000.

When the average polymerization degree is too small, the mechanical strength of the PVA-based resin (B) layer tends to be insufficient. Conversely, when the average polymerization degree is too large, in the case of forming the PVA-based resin (B) layer by hot melt molding, the fluidity and the moldability tend to decrease, abnormal shear heat may occur during molding, and thermal decomposition of the PVA-based resin (B) may occur.

In addition, the PVA-based resin (B) for use in the present invention has a degree of saponification (average degree of saponification measured in accordance with JIS K6726) of preferably from 80 % by mole to 100 % by mole, particularly preferably from 90 % by mole to 99.9 % by mole, and especially preferably from 98 % by mole to 99.9 % by mole.

When the degree of saponification is too low, the gas barrier properties tend to decrease.

Further, in the present invention, as the PVA-based resin (B), a PVA-based resin obtained by copolymerizing various monomers during production of the polyvinyl ester-based resin, followed by saponifying, or a various modified PVA-based resins obtained by introducing various functional groups by post-modification into an unmodified PVA can be used.

Examples of the monomer for use in copolymerization with the vinyl ester-based monomer include: olefins such as ethylene, propylene, isobutylene, α-octene, α-dodecene, and α-octadecene; hydroxy group-containing α-olefins such as 3-buten-1-ol, 4-penten-1-ol, 5-hexen-1-ol, and 3,4-dihydroxy-1-butene, and derivatives such as an acylated product thereof; unsaturated acids such as acrylic acid, methacrylic acid, crotonic acid, maleic acid, maleic anhydride, and itaconic acid, and a salt thereof, a monoester, or a dialkyl ester thereof; nitriles such as acrylonitrile and methacrylonitrile; amides such as diacetone acrylamide, acrylamide, and methacrylamide; olefin sulfonic acids such as ethylene sulfonic acid, allyl sulfonic acid, and methallyl sulfonic acid, or a salt thereof; vinyl compounds such as alkyl vinyl ethers, dimethylallyl vinyl ketone, N-vinylpyrrolidone, vinyl chloride, vinyl ethylene carbonate, 2,2-dialkyl-4-vinyl-1,3-dioxolane, glycerin monoallyl ether, and 3,4-diacetoxy-1-butene; substituted vinyl acetates such as isopropenyl acetate and 1-methoxyvinyl acetate; vinylidene chloride; 1,4-diacetoxy-2-butene; and vinylene carbonate.

Further, examples of the modified PVA-based resin obtained by introduction of functional groups by post-modification include a resin having an acetoacetyl group introduced by a reaction with a diketene, a resin having a polyalkylene oxide group introduced by a reaction with ethylene oxide, a resin having a hydroxyalkyl group introduced by a reaction with an epoxy compound or the like, or a resin obtained by reacting an aldehyde compound having any of various functional groups with PVA.

A modification species in the modified PVA-based resin, that is, the content of structural units derived from each type of monomers in the copolymer or functional groups introduced by post-reaction, is preferably in a range of from 1 % by mole to 20 % by mole, and particularly preferably from 2 % by mole to 10 % by mole, although it cannot be generalized since the properties vary greatly depending on the modification species.

Among these various modified PVA-based resins, in the present invention, a PVA-based resin having a structural unit having a 1,2-diol structure (hereinafter, may be referred to as a "1,2-diol structural unit") in a side chain represented by the following general formula (3) is preferably used in a method for producing the laminate according to the present invention to be described later from the viewpoint of ease of melt-molding.

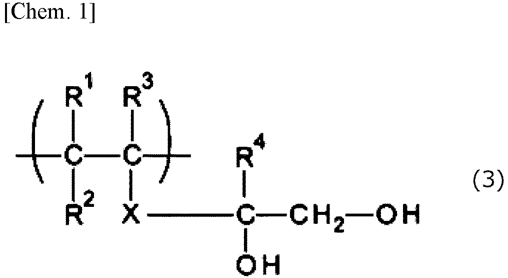

Note that, R¹ to R⁴ in the 1,2-diol structural unit represented by the general formula (3) each independently represent a hydrogen atom or a linear or branched alkyl group having 1 to 4 carbon atoms.

Examples of the alkyl group include a methyl group, an ethyl group, a n-propyl group, an isopropyl group, a n-butyl group, an isobutyl group, and a tert-butyl group. The alkyl group may have a functional group such as a halogen group, a hydroxy group, an ester group, a carboxylic acid group or a sulfonic acid group, if necessary.

In addition, X in the 1,2-diol structural unit represented by the general formula (3) represents a single bond or a bond chain.

Examples of the bond chain include hydrocarbons (which may be substituted with halogens such as a fluorine atom, a chlorine atom, and a bromine atom, or the like) such as a linear or branched alkylene group having 1 to 6 carbon atoms, a linear or branched alkenylene group having 1 to 6 carbon atoms, a linear or branched alkynylene group having 1 to 6 carbon atoms, a phenylene group, and a naphthylene group, -O-, -(CHzO)t-, -(OCH₂)ₜ-, -(CH₂O)ₜCH₂-, -CO-, -COCO-, -CO(CH₂)ₜCO-, - CO(C₆H₄)CO-, -S-, -CS-, -SO-, -SO₂-, -NR-, -CONR-, -NRCO-, -CSNR-, -NRCS-, -NRNR-, -HPO₄-, - Si(OR)₂-, -OSi(OR)₂-, -OSi(OR)₂O-, -Ti(OR)₂-, -OTi(OR)₂-, -OTi(OR)₂O-, -Al(OR)-, -OAl(OR)-, and -OAl(OR)O- (in which each R is independently any substituent, and represents a hydrogen atom or a linear or branched alkyl group having 1 to 6 carbon atoms, and t represents an integer of 1 to 5).

Among them, the bond chain is preferably a linear or branched alkylene group having 1 to 6 carbon atoms, particularly preferably a methylene group or -CH₂OCH₂-, from the viewpoint of stability during production or use.

X is most preferably a single bond from the viewpoint of thermal stability and stability under high temperature or acidic conditions.

Among the 1,2-diol structural unit represented by the general formula (3), a structural unit represented by the following general formula (4), in which R¹ to R⁴ are all hydrogen atoms and X is a single bond, is most preferred.

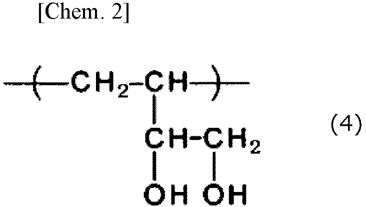

Examples of a method for producing a PVA-based resin having the 1,2-diol structural unit in the side chain include a method described in paragraphs [0026] to [0034] of JP2015-143356A.

A content of the 1,2-diol structural unit contained in the PVA-based resin having the 1,2-diol structural unit in the side chain is preferably from 1 % by mole to 20 % by mole, more preferably from 2 % by mole to 10 % by mole, and particularly preferably from 3 % by mole to 8 % by mole. When the content is too small, the effect of the 1,2-diol structure in the side chain is difficult to obtain. Conversely, when the content is too large, the gas barrier properties tend to decrease greatly at a high humidity.

Note that, the content of the 1,2-diol structural unit in the PVA-based resin can be determined based on a ¹H-NMR spectrum (solvent: DMSO-d6, internal standard substance: tetramethylsilane) of a completely saponified PVA-based resin. Specifically, the content may be calculated based on peak areas derived from a hydroxy group proton, a methine proton, and a methylene proton in the 1,2-diol structural unit, a methylene proton in the main chain, a proton of a hydroxy group linked to the main chain, and the like.

In addition, the PVA-based resin (B) for use in the present invention may be composed of one kind or a mixture of two or more kinds thereof. When the PVA-based resin (B) is a mixture of two or more kinds, a combination of the above unmodified PVAs, an unmodified PVA and a PVA-based resin having the structural unit represented by the general formula (3), PVA-based resins each having the structural unit represented by the general formula (3) but having different degrees of saponification, degrees of polymerization, or degrees of modification or the like, an unmodified PVA or a PVA-based resin having the structural unit represented by the general formula (3) with another modified PVA-based resin can be used.

The PVA-based resin (B) layer for use in the present invention may be blended with a heat stabilizer, an antioxidant, a UV absorber, a crystal nucleating agent, an antistatic agent, a flame retardant, a plasticizer, a lubricant, a filler, a lubricant, and a crystal nucleating agent, in addition to the PVA-based resin (B).

### [Biodegradable Resin (C)]

A biodegradable resin (C) is preferably used as an outer layer of the laminate according to the present invention to be described later.

A layer containing the biodegradable resin (C) (biodegradable resin (C) layer) is a layer containing the biodegradable resin (C) as a main component, and generally contains the biodegradable resin (C) in an amount of 70 mass% or more, preferably 80 mass% or more, and more preferably 90 mass% or more. The upper limit is 100 mass%.

Examples of the biodegradable resin (C) include: aliphatic polyesters such as a polylactic acid (C1), a polycondensate of adipic acid/terephthalic acid/1,4-butanediol (polybutylene adipate terephthalate (C2)), a polycondensate of succinic acid/1,4-butanediol/lactic acid, and polyglycolic acid; modified starch; casein plastics; and cellulose. These may be used alone or in combination of two or more kinds thereof. Examples of a commercially available biodegradable resin (C) include "Forzeas" manufactured by Mitsubishi Chemical Corporation, "Ingeo" manufactured by NatureWorks LLC, "Lacea" manufactured by Mitsui Chemicals, Inc., "REVODE" manufactured by Zhejiang Hisun Biomaterials Co., Ltd., and "VYLOECOL" manufactured by TOYOBO CO., LTD.

Among them, a polylactic acid (C1) and polybutylene adipate terephthalate (C2) are preferred from the viewpoint of strength. Further, a mixture (C3) of the polylactic acid (C1) and the polybutylene adipate terephthalate (C2) is preferred from the viewpoint of adhesiveness and strength.

The polylactic acid (C1) is an aliphatic polyester-based resin containing a lactic acid structural unit as a main component, and is a polymer containing, as a raw material, L-lactic acid, D-lactic acid, or a cyclic dimer thereof, L-lactide, D-lactide, and DL-lactide.

The polylactic acid (C1) for use in the present invention is preferably a homopolymer of these lactic acids, and may contain copolymerization components other than lactic acids in an amount that does not impair the properties, for example, 10 % by mole or less.

Examples of the copolymerization component include: aliphatic hydroxycarboxylic acids such as glycolic acid, 3-hydroxybutyric acid, 4-hydroxybutyric acid, 3-hydroxyvaleric acid, 4-hydroxyvaleric acid, and 6-hydroxycaproic acid; lactones such as caprolactone; aliphatic diols such as ethylene glycol, diethylene glycol, triethylene glycol, polyethylene glycol, propylene glycol, and 1,4-butanediol; and aliphatic dibasic acids such as succinic acid, oxalic acid, malonic acid, glutaric acid, and adipic acid.

In addition, a content ratio of a L-lactic acid component to a D-lactic acid component in the polylactic acid (C1) (the mass of the L-lactic acid component / the mass of the D-lactic acid component) is preferably 95/5 or more, particularly preferably 99/1 or more, and especially preferably 99.8/0.2. As the value is increased, the melting point is increased to improve the heat resistance. Conversely, as the value is decreased, the melting point tends to increase, and therefore, the heat resistance tends to be insufficient.

Specifically, in the case of a homopolymer of the polylactic acid (C1), the homopolymer has a melting point of 152°C when the content ratio is 95/5, 171°C when the content ratio is 99/1, and 175°C or higher when the content ratio is 99.8/0.2.

Further, the polylactic acid (C1) for use in the present invention has a weight average molecular weight of preferably from 20,000 to 1,000,000, particularly preferably from 30,000 to 300,000, and especially preferably from 40,000 to 200,000. When the weight average molecular weight is too large, the melt viscosity during hot melt molding is too high, and therefore, it tends to be difficult to form a good film. Conversely, when the weight average molecular weight is too small, the mechanical strength of the obtained laminate tends to be insufficient.

The weight average molecular weight can be measured by size exclusion chromatography (GPC, gel permeation chromatography) as polystyrene equivalent according to ISO 16014-1 and ISO 16014-3 standards using tetrahydrofuran as an eluent and a column (polystyrene gel) heated to 40°C.

The polybutylene adipate terephthalate (C2) is obtained by polycondensation of adipic acid, terephthalic acid, and 1,4-butanediol.

The content of adipic acid in the polybutylene adipate terephthalate (C2) is preferably from 10 % by mole to 50 % by mole, and more preferably from 15 % by mole to 40 % by mole.

The content of terephthalic acid in the polybutylene adipate terephthalate (C2) is preferably from 5 % by mole to 45 % by mole, and more preferably from 8 % by mole to 35 % by mole.

The content of 1,4-butanediol in the polybutylene adipate terephthalate (C2) is preferably from 5 % by mole to 45 % by mole, and more preferably from 10 % by mole to 30 % by mole.

When the content of each component is too large or too small, processability and corrosion resistance tend to decrease.

The polybutylene adipate terephthalate (C2) has a weight average molecular weight of preferably from 3,000 to 1,000,000, more preferably from 20,000 to 600,000, and still more preferably from 50,000 to 400,000.

The weight average molecular weight can be measured by size exclusion chromatography (GPC, gel permeation chromatography) as polystyrene equivalent according to ISO 16014-1 and ISO 16014-3 standards using tetrahydrofuran as an eluent and a column (polystyrene gel) heated to 40°C.

When the weight average molecular weight is too small, the production is difficult, and when the weight average molecular weight is too large, the melt viscosity tends to increase and the moldability tends to decrease.

The polybutylene adipate terephthalate (C2) may contain other copolymerization components in addition to adipic acid, terephthalic acid, and 1,4-butanediol.

Examples of the other copolymerization components include: dihydroxy compounds such as diethylene glycol, triethylene glycol, polyethylene glycol, polypropylene glycol, and polytetrahydrofuran (poly-THF); glycolic acid, D-lactic acid, L-lactic acid, D,L-lactic acid, and 6-hydroxyhexanoic acid, and a cyclic derivative thereof, for example, glycolide (1,4-dioxane-2,5-dione), D-dilactide, and L-dilactide (3,6-dimethyl-1,4-dioxane-2,5-dione); and hydroxycarboxylic acids such as p-hydroxybenzoic acid and an oligomer and a polymer of p-hydroxybenzoic acid.

The content of the other copolymerization components is about 0.1 % by mole to 30 % by mole of the entire polybutylene adipate terephthalate (C2).

In the case of using the mixture (C3) of the polylactic acid (C1) and the polybutylene adipate terephthalate (C2), the mixing ratio of polylactic acid/polybutylene adipate terephthalate (mass ratio) is from 10/90 to 90/10, and preferably from 20/80 to 60/40.

The biodegradable resin (C) may contain an inorganic filler. Examples of the inorganic filler include anhydrous silica, mica, talc, mica, clay, titanium oxide, calcium carbonate, diatomaceous earth, allophane, bentonite, potassium titanate, zeolite, sepiolite, smectite, kaolin, kaolinite, glass, limestone, carbon, wollastonite, calcined perlite, silicates such as calcium silicate and sodium silicate, aluminum oxide, magnesium carbonate, hydroxides such as calcium hydroxide, ferrous carbonate, zinc oxide, iron oxide, and salts such as aluminum phosphate and barium sulfate.

In addition, the biodegradable resin (C) layer for use in the present invention may be blended with a heat stabilizer, an antioxidant, a UV absorber, a crystal nucleating agent, an antistatic agent, a flame retardant, a plasticizer, a lubricant, a filler, a lubricant, and a crystal nucleating agent, other than the biodegradable resin (C).

### [Laminate]

The laminate according to the present invention includes at least one layer containing the adhesive resin composition (A) according to the present invention (hereinafter, may be referred to as an "adhesive resin composition (A) layer").

The adhesive resin composition (A) layer is a layer containing the adhesive resin composition (A) as a main component, and generally contains the adhesive resin composition (A) in an amount of 70 mass% or more, preferably 80 mass% or more, and more preferably 90 mass% or more. The upper limit is 100 mass%.

The adhesive resin composition (A) layer may contain a heat stabilizer, an antioxidant, a UV absorber, a crystal nucleating agent, an antistatic agent, a flame retardant, a plasticizer, a lubricant, a filler lubricant, and a crystal nucleating agent, other than the adhesive resin composition (A).

The laminate according to the present invention preferably includes the biodegradable resin (C) layer as a layer other than the adhesive resin composition (A) layer.

Among them, the laminate according to the present invention preferably uses the PVA-based resin (B) layer as a gas barrier layer and the biodegradable resin (C) layer as an outer layer.

In addition, the laminate according to the present invention is a laminate provided with an adhesive layer between the PVA-based resin (B) layer and the biodegradable resin (C) layer, and the adhesive layer contains the adhesive resin composition (A) according to the present invention. The laminate preferably has a layer structure of from 3 to 15 layers, more preferably from 3 to 7 layers, and particularly preferably from 5 to 7 layers.

The configuration of the laminate according to the present invention is not particularly limited. When the adhesive resin composition (A) layer (adhesive layer) is defined as a, the PVA-based resin (B) layer is defined as b, and the biodegradable resin (C) layer is defined as c, any combination of c/a/b, c/a/b/a/c, and c/b/a/b/a/b/c is possible. Note that, when the laminate includes a plurality of biodegradable resin (C) layers, the plurality of biodegradable resin (C) layers may be same as or different from each other. The same applies to the case where the laminate includes a plurality of PVA-based resin (B) layers and the case where the laminate includes a plurality of adhesive resin composition (A) layers.

Note that, in order to prevent a decrease in gas barrier properties due to moisture absorption of the PVA-based resin (B) layer, it is preferred that the PVA resin (B) layer has a layer structure in which the biodegradable resin (C) layer is provided in a portion in contact with outside air or contents containing moisture.

The laminate according to the present invention generally has the thickness of a range from 1 µm to 30,000 µm, particularly preferably from 3 µm to 13,000 µm, and especially preferably from 10 µm to 3,000 µm .

Further, as the thickness of each layer constituting the laminate, the adhesive resin composition (A) layer (adhesive layer) has a thickness of preferably from 0.1 µm to 500 µm, more preferably from 0.15 µm to 250 µm, and particularly preferably from 0.5 µm to 50 µm. When the thickness of the adhesive resin composition (A) layer is too large, the appearance may be poor. Conversely, when the thickness of the adhesive resin composition (A) layer is too small, the adhesion force tends to be small.

The PVA-based resin (B) layer has a thickness of preferably from 0.1 µm to 1,000 µm, more preferably from 0.3 µm to 500 µm, and particularly preferably from 1 µm to 100 µm. When the thickness of the PVA-based resin (B) layer is too large, the laminate tends to be hard and brittle. Conversely, when the thickness of the PVA-based resin (B) layer is too small, the gas barrier properties tend to decrease.

The biodegradable resin (C) layer has a thickness of preferably from 0.4 µm to 14,000 µm, more preferably from 1 µm to 6,000 µm, and particularly preferably from 4 µm to 1,400 µm. When the thickness of the biodegradable resin (C) layer is too large, the laminate tends to be too hard. Conversely, when the thickness of the biodegradable resin (C) layer is too small, the laminate tends to be brittle.

When there are a plurality of layers for each layer, as for the ratio of the thickness of the biodegradable resin (C) layer to the thickness of the PVA-based resin (B) layer (the thickness of the biodegradable resin (C) layer / the thickness of the PVA-based resin (B) layer), the ratio of the sum of the thicknesses of the biodegradable resin (C) layers to the sum of the thicknesses of the PVA resin (B) layers is preferably from 1 to 100, and more preferably from 2.5 to 50. When the ratio is too large, the barrier properties tend to decrease, and when the ratio is too small, the laminate tends to be hard and brittle.

In addition, when there are a plurality of adhesive resin composition (A) layers (adhesive layers), as for the ratio of the thickness of the laminate according to the present invention to the thickness of the adhesive resin composition (A) layer (adhesive layer) (the thickness of the adhesive resin composition (A) layer / the thickness of the laminate according to the present invention), the ratio of the sum of the thicknesses of the acid-modified polyester resin (A) layers to the thickness of the laminate of the present invention is preferably from 0.005 to 3.0, and more preferably from 0.01 to 1.0. When the ratio is too large, the appearance tends to deteriorate, and when the ratio is too small, the adhesion force tends to be small.

The laminate according to the present invention can be produced by a common molding method, and specifically, a melt molding method or a molding method from a solution state can be used.

Examples of the melt molding method include a method of sequentially or simultaneously subjecting the adhesive resin composition (A) and the PVA-based resin (B) to melt extrusion lamination onto a film or sheet of the biodegradable resin (C), conversely, a method of sequentially or simultaneously subjecting the adhesive resin composition (A) and the biodegradable resin (C) to melt extrusion lamination onto a film or sheet of the PVA-based resin (B), or a method of co-extruding the biodegradable resin (C), the adhesive resin composition (A), and the PVA-based resin (B).

Further, examples of the molding method from a solution state include a method of solution coating a film or sheet of the biodegradable resin (C) with a solution of the adhesive resin composition (A) dissolved in a good solvent, followed by drying, and solution coating thereon with an aqueous solution of the PVA-based resin (B).

Among them, the melt molding method is preferred since the laminate can be produced in one step and a laminate having excellent interlayer adhesiveness can be obtained, and the coextrusion method is particularly preferably used. Further, when the melt molding method is used, it is preferable to use a PVA-based resin having a 1,2-diol structural unit in the side chain as the PVA-based resin (B).

Specific examples of the above coextrusion method include an inflation method, a T-die method, a multi-manifold die method, a feed block method, and a multi-slot die method. As for the shape of the die, a T die, a round die, or the like, can be used.

The melt molding temperature during melt extrusion is in a range of preferably from 140°C to 250°C, and more preferably from 160°C to 230°C.

The laminate according to the present invention may be a laminate further subjected to a heat stretching treatment, and the stretching treatment is expected to improve the strength and the gas barrier properties.

Particularly, when a PVA-based resin having a 1,2-diol structural unit in the side chain is used as the PVA-based resin (B) in the laminate according to the present invention, the stretchability is enhanced.

Note that, as the above stretching treatment or the like, a common stretching method can be used.

Specific examples thereof include uniaxial stretching method and biaxial stretching method, in which both edges of a multilayer structure sheet are gripped and the width of the sheet is increased; a mold molding method in which a multilayer structure sheet is stretched using a mold such as a deep drawing molding method, a vacuum molding method, an air-pressure molding method, and a vacuum air-pressure molding method; and a method of processing a pre-molded multilayer structure such as a parison by a tubular stretching method, a stretch blowing method, and the like.

As the stretching method, when molded product in a film or sheet-like is desired to be obtained, it is preferable to use a uniaxial stretching method or a biaxial stretching method.

In addition, in the case of the mold molding methods such as a deep drawing molding method, a vacuum molding method, an air-pressure molding method, and a vacuum air-pressure molding method, it is preferable that the laminate is uniformly heated in a hot air oven, a heater oven or a combination thereof, or the like, and then, the heated laminate is stretched by a chuck, a plug, a vacuum force, a compressed air force, or the like.

When a molded product having a drawing ratio (a depth (mm) of the molded product / a maximum diameter (mm) of the molded product) of generally 0.1 to 3, such as a cup and a tray is desired to be obtained, it is preferable to use a mold molding method in which a mold is used for stretching, such as a deep drawing molding method, a vacuum molding method, an air-pressure molding method, and a vacuum air-pressure molding method.

The laminate according to the present invention thus obtained has a strong adhesion force between any of the layers, for example, between the biodegradable resin (C) layer and the adhesive resin composition (A) layer, and between the PVA-based resin (B) layer and the adhesive resin composition (A) layer.

In addition, the adhesive resin composition (A), the biodegradable resin (C), and the PVA-based resin (B) are all biodegradable, and the laminate according to the present invention including at least one layer of the adhesive resin composition (A) layer is also biodegradable.

The laminate according to the present invention is biodegradable, and is thus suitable for use in a product that can be disposed of directly in the compost, for example, coffee capsules (coffee bean containers for capsule-type coffee makers), shrink films, and other food and beverage containers and packaging materials.

Further, when the laminate according to the present invention includes the PVA-based resin (B) layer, the PVA-based resin (B) layer can be dissolved in water and removed, and only the remaining water-insoluble resin can be recycled.

The adhesive layer of the laminate according to the present invention may contain only one kind of the modified polyester-based resin described above, or may contain two or more kinds thereof. Examples

Hereinafter, specific embodiments of the present invention will be described in more detail using Examples, but the present invention is not limited to the following Examples unless it departs from the gist thereof.

The values of the various production conditions and evaluation results in the following Examples mean preferred values of the upper limit or the lower limit in embodiments of the present invention, and a preferred range may be a range defined by the aforementioned upper limit or lower limit value and either the value in the Examples or a combination of the values in the Examples. Note that, in Examples, the term "parts" and "%" are in terms of mass.

### [Measurement of Melt Flow Rate (MFR) of Used Resin]

Based on JIS K7210 (1999), the measurement was carried out at 190°C with a load of 2.16 kg using a melt indexer. The unit is g/10 min. Provided that, the melt flow rate of G-Polymer was measured at 210°C and a load of 2.16 kg.

### [Raw Material to be Used]

The resins and other raw materials used in the Examples and Comparative Examples are as follows.
"PBST" represents "polybutylene succinate terephthalate", "PBAT" represents "polybutylene adipate terephthalate", and "PLA" represents "polylactic acid".

### (Production Example 1: Production of Polybutylene Succinate Terephthalate (PBST))

### [Preparation of Polycondensation Catalyst]

To a reactor equipped with a stirring device, 343.5 parts of magnesium acetate tetrahydrate was added, and then 1,434 parts of absolute ethanol (purity: 99 mass% or more) was added. Further, 218.3 parts of ethyl acid phosphate (mixing mass ratio of monoester to diester: 45:55) was added, and the mixture was stirred at 23°C. After confirming that magnesium acetate had completely dissolved, 410.0 parts of tetra-n-butyl titanate was added. Further, stirring was continued for 10 minutes to obtain a homogeneous mixed solution. The mixed solution was concentrated under a reduced pressure while controlling the temperature at 60°C or lower. Approximately half of the added ethanol was distilled off, leaving a translucent viscous liquid. To this 1,108 parts of 1,4-butanediol was added, and the mixture was further concentrated under a reduced pressure while controlling the temperature at 80°C or lower, to obtain a catalyst solution having a titanium atom content of 3.5%.

### [Polymerization of Polybutylene Succinate Terephthalate (PBST)]

To a reaction container equipped with a stirring device, a nitrogen inlet, a heating device, a thermometer, and a pressure reduction port, 33.6 parts of succinic acid, 38.6 parts of terephthalic acid, 69.7 parts of 1,4-butanediol, 0.138 parts (0.200 % by mole with respect to 100 % by mole of a total amount of succinic acid and terephthalic acid) of trimethylolpropane, 0.10 parts of polyethylene wax ("ACumist B6" manufactured by Honeywell Inc., melting point: 124°C), and 0.0017 parts of sodium hydroxide (NaOH) were added as raw materials, and further tetra-n-butyl titanate was added such that the titanium atom content was 30 ppm per polyester resin obtained. While stirring the contents in the container, a nitrogen gas was introduced into the container, and the inside of the system was substituted with nitrogen by reducing the pressure. Next, the temperature in the system was raised from 160°C to 230°C over 1 hour with stirring, and the reaction was carried out at this temperature for 3 hours. The terminal acid value of the obtained ester oligomer was measured and found to be 90 eq./ton.

To the ester oligomer, the catalyst solution was added in an amount to give 70 ppm of titanium atom per polyester obtained, and the temperature was raised to 250°C over 45 minutes. At the same time, the pressure was reduced to 0.07 × 10³ Pa or less over 1 hour and 20 minutes, polycondensation was continued while maintaining the heated and reduced pressure state, and when a predetermined viscosity was reached, the polymerization was terminated, to give polybutylene succinate terephthalate (PBST).
<Component A>
   A-1: PBST (PBST prepared in Production Example 1 above, MFR: 5.0 g/10 min, melting point: 110°C)
   A-2: PBAT ("Ecoflex C1200" manufactured by BASF, MFR: 2.7 g/10 min to 4.9 g/10 min, melting point: 110°C to 120°C)
<Component B>
   B-1: maleic anhydride (manufactured by FUJIFILM Wako Pure Chemical Corporation)
<Component C>
   C-1: TRIGONOX 101-50D-PD (manufactured by Nouryon Functional Chemicals B.V.)
<Outer Layer for Biodegradable Laminate>
   PLA ("4032D" manufactured by NatureWorks LLC, MFR: 3.5 g/10 min, melting point: 170°C)
<PVA-based Resin>
   G-Polymer ("BVE8049P" manufactured by Mitsubishi Chemical Corporation, MFR: 4.0 g/10 min, melting point: 185°C)

### (Example 1)

A mixture obtained by mixing in advance 100 parts of the component A-1, 0.05 parts of the component B-1, and 0.07 parts of the component C-1 by dry blending was melt-kneaded using a twin-screw extruder TEX30α-56AW-9V (D = 32 mmcp, LID = 56, manufactured by The Japan Steel Works, LTD.) at 180°C and a screw rotation speed of 300 rpm. Thereafter, the molten kneaded product was extruded into a string shape, cooled, and then cut to obtain pellets of a modified polyester-based resin. The modified polyester-based resin had an MFR of 2.7 g/10 min.

The obtained modified polyester-based resin (a), a PVA-based resin (b), and a PLA (c) were used to mold a three-kind, five-layer laminate (film) of c/a/b/a/c (a: adhesive layer, b: intermediate layer (barrier layer), c: surface layer) using a T-die molding machine. The molding temperature was 200°C, the line speed was 11 m/min. The thickness of the individual layers were as follows: c/a/b/a/c = 30/10/20/10/30 µm, and the total thickness of the laminate was 100 µm.

### (Examples 2 and 3 and Comparative Examples 1 and 2)

A laminate was prepared in the same manner as in Example 1, except that the resin composition was changed as shown in Table 1 to produce a modified polyester-based resin.

The adhesive strength and the appearance of the obtained laminate were evaluated by the following methods. The results are shown in Table 1.

### <Adhesive Strength>

The adhesive strength between the a layer and the b layer was measured. The laminate was cut into a 15 mm wide strip, and the adhesive strength between two layers of c/a and three layers of b/a/c was measured by a T-peel test at a peel speed of 300 mm/min. Note that, when the adhesive strength of the two layers and the three layers is too strong, the adhesive strength between c layer alone and four layers of a/b/a/c may be measured. In this test, the adhesive strength of the two layers and the three layers was measured and comparison was made.

### <Appearance>

The appearance of the laminate was evaluated based on the following criteria.
A (good): there is almost no combustion marks (combusted and discolored molding material), fish eyes, or unevenness in the laminate.
B (acceptable): combustion marks, fish eyes, or unevenness are observed, but the laminate can be molded.
C (unacceptable): defects (holes, tears) occur when molding the laminate.

**[Table 1]**

| | | | Example 1 | Example 2 | Example 3 | Comparative Example 1 | Comparative Example 2 |
|---|---|---|---|---|---|---|---|
| Blending composition [part by mass] in resin composition | Component A | A-1 | 100 | 100 | 100 | 100 | - |
| | | A-2 | - | - | - | - | 100 |
| | Component B | B-1 | 0.05 | 0.15 | 0.25 | 0 | 0.25 |
| | Component C | C-1 | 0.07 | 0.21 | 0.35 | 0 | 0.35 |
| MFR | 210°C, g/10 min | | 2.7 | 2.7 | 3.5 | 6.7 | 1.6 |
| Adhesive strength [N] | Film | | 8.0 | 5.8 | 5.0 | 0.1 | 5.1 |
| Appearance | | | A | A | B | A | C |

As shown in Table 1, the laminates of Examples 1 to 3 had sufficiently high adhesive strength, and the appearance was also at a level that did not pose any problems in practical use.

Although the present invention has been explained in detail using specific embodiments, it is obvious to those skilled in the art that various modifications can be made without departing from the spirit and the scope of the present invention.

Although the present invention has been described in detail with reference to the specific embodiment, it will be apparent to those skilled in the art that various changes and modifications can be made without departing from the spirit and scope of the present invention. The present application is based on Japanese patent application No. 2022-051564 filed on March 28, 2022, the content of which is incorporated herein as reference.

### INDUSTRIAL APPLICABILITY

The adhesive resin composition according to the present invention can be suitably used as an adhesive layer for a biodegradable resin to obtain a laminate. The obtained laminate is biodegradable, and is thus suitable for use in a product that can be disposed of directly in the compost as they are, for example, coffee capsules (coffee bean containers for capsule-type coffee makers), shrink films, and other food and beverage containers and packaging materials.

## Claims

1. A modified polyester-based resin, which is a copolymer in which an aliphatic-aromatic polyester-based resin is graft-modified with at least one selected from the group consisting of an α,β-unsaturated carboxylic acid and an anhydride thereof,
the modified polyester-based resin containing succinic acid as an aliphatic dicarboxylic acid unit constituting the aliphatic-aromatic polyester-based resin.

2. The modified polyester-based resin according to claim 1, comprising:
terephthalic acid as an aromatic dicarboxylic acid unit constituting the aliphatic-aromatic polyester-based resin.

3. The modified polyester-based resin according to claim 1, wherein an amount of the succinic acid unit is 10 % by mole or more with respect to a total amount of the dicarboxylic acid unit.

4. An adhesive resin composition comprising:
the modified polyester-based resin according to any one of claims 1 to 3.

5. A laminate comprising:
at least one layer containing the adhesive resin composition according to claim 4.

6. A laminate comprising:
a polyvinyl alcohol resin (B) layer; a biodegradable resin (C) layer; and an adhesive layer between the above two layers, wherein
the adhesive layer contains the adhesive resin composition according to claim 4.
